# EUROPEAN PATENT APPLICATION

(11) **EP 4 213 271 A1**
(43) Date of publication of application: **19.07.2023**
(21) Application number: 22209639.8
(22) Date of filing: 25.11.2022
(51) Int. Cl.: H01M 10/0587, H01M 10/04, H01M 10/052, H01M 50/103, H01M 50/209, H01M 50/264

(54) **PRODUCING METHOD OF FLAT-WOUND ELECTRODE BODY, PRODUCING METHOD OF BATTERY, AND PRODUCING METHOD OF BATTERY MODULE**

(30) Priority: 12.01.2022 JP 2022003033
(71) Applicant: Prime Planet Energy & Solutions, Inc., Chuo-ku Tokyo 103-0022 (JP)
(72) Inventor: HOJO, Takayuki, Tokyo, 103-0022 (JP)
(74) Representative: Kuhnen & Wacker Patent- und Rechtsanwaltsbüro PartG mbB

(57) **Abstract**

A producing method of a flat-wound electrode body (1), which is formed by winding a strip-shaped positive electrode plate (10) and a strip-shaped negative electrode plate (20) via a pair of separators (30,40) into a flat shape, includes winding (S11) of forming a cylindrical-wound electrode body (1Z) by winding the positive electrode plate (10) and the negative electrode plate (20) interposed with the pair of separators (30,40) into a cylindrical shape, and pressing (S12) of forming the flat-wound electrode body (1) by pressing and flattening the cylindrical-wound electrode body (1Z). The pressing (S12) is to perform pressing to position a positive electrode end portion (10e) at a winding end of the positive electrode plate (10) in a flat portion (2) of the flat-wound electrode body (1).

## Description

### BACKGROUND

### Technical Field

The present disclosure relates to a producing method of a flat-wound electrode body formed by winding a positive electrode plate, a negative electrode plate, and a pair of separators, each of which is of a strip shape, into a flat shape, a producing method of a battery provided with this flat-wound electrode body, and a producing method of a battery module provided with this battery.

### Related Art

Heretofore, as an electrode body of a battery, there has been known a flat-wound electrode body in which a strip-shaped positive electrode plate and a strip-shaped negative electrode plate are wound into a flat shape interposed with a pair of strip-shaped separators. This flat-wound electrode body is produced as follows. Specifically, the strip-shaped positive electrode plate, the strip-shaped separator, the strip-shaped negative electrode plate, and the strip-shaped separator are laminated in this order and wound into a cylindrical shape to form a cylindrical-wound electrode body. This cylindrical-wound electrode body is then pressed and flattened to form the flat-wound electrode body. Herein, in a wound electrode body, regularly, a negative electrode plate is designed to be longer than a positive electrode plate, and separators are designed to be longer than the positive electrode plate and the negative electrode plate so that the negative electrode plate is finished with its winding after finishing winding the positive electrode plate, and the separators are finished with their winding thereafter. As a related conventional technique, JP2017-059395A (see FIG. 1 and FIG. 2) has been known, for example.

### SUMMARY

### Technical Problems

By the way, when a cylindrical-wound electrode body is to be pressed, there has not been considered about a circumferential position of a winding end portion of each component (a positive electrode plate, a negative electrode plate, and a pair of separators) configuring the cylindrical-wound electrode body, especially a circumferential position of a positive electrode end portion of the positive electrode plate that is hidden inside by the negative electrode plate and the separators. Accordingly, in a completed flat-wound electrode body, the circumferential position of the positive electrode end portion has been varied depending on a way of arranging the circumferential position of the cylindrical-wound electrode body when the electrode body is to be set in the pressing machine. In other words, there is a case that a flat-wound electrode body in which a positive electrode end portion is positioned in a flat part of the flat-wound electrode body (namely, a portion where a positive electrode plate, a negative electrode plate, and separators are laminated in a flat shape) is produced, and there is another case that the flat-wound electrode body in which the positive electrode end portion is positioned in one of R parts located on both sides of the flat part of the flat-wound electrode body (portions where the positive electrode plate, the negative electrode plate, and the separators are bent in a semicylindrical shape and laminated) is produced.

However, the positive electrode end portion is hard to be bent as compared with a midway part in a longitudinal direction of the positive electrode plate. Accordingly, when the positive electrode end portion is positioned in the R part of the flat-wound electrode body, the positive electrode end portion floats up to cause increase in a distance between the positive electrode end portion and an opposed part of the negative electrode plate opposing a radial inside of the positive electrode end portion, which results in unevenness in an inter-electrode-plate distance between the positive electrode plate and the negative electrode plate in a vicinity of the positive electrode end portion.

The present disclosure has been made in view of the above circumstance and has a purpose of providing a producing method of a flat-wound electrode body which can restrain a positive electrode end portion from floating up and restrain unevenness in an inter-electrode-plate distance between a positive electrode plate and a negative electrode plate in a vicinity of the positive electrode end portion, a producing method of a battery provided with this flat-wound electrode body, and a producing method of a battery module in which a plurality of batteries each of which includes this flat-wound electrode body are laminated and bound.

### Means of Solving the Problems

One aspect of the present disclosure to solve the above problem is a producing method of a flat-wound electrode body in which a positive electrode plate of a strip shape and a negative electrode plate of a strip shape are wound into a flat shape interposed with a pair of separators of a strip shape, wherein the method includes: winding the positive electrode plate and the negative electrode plate into a flat shape interposed with the pair of separators to form a cylindrical-wound electrode body; and pressing the cylindrical-wound electrode body to be flattened to form the flat-wound electrode body, and the pressing is performed to position a positive electrode end portion at a winding end of the positive electrode plate in a flat portion of the flat-wound electrode body.

In the above-mentioned producing method of the flat-wound electrode body, the cylindrical-wound electrode body is pressed such that the positive electrode end portion of the positive electrode plate is positioned in the flat portion of the flat-wound electrode body after pressing to form the flat-wound electrode body. Thus, the positive electrode end portion of the positive electrode plate can be positioned in the flat portion of the flat-wound electrode body in any one of produced flat-wound electrode bodies, and thus floating of the positive electrode end portion can be restrained, and unevenness of an inter-electrode-plate distance between the positive electrode plate and the negative electrode plate in a vicinity of the positive electrode end portion can be restrained in any flat-wound electrode bodies.

Further, in the above-mentioned producing method of the flat-wound electrode body, preferably, the winding is to form the cylindrical-wound electrode body to be disposed with a circumferential position of the positive electrode end portion and a circumferential position of a first separator end portion of a first separator of the pair of the separators, which is finally finished with winding, being in a predetermined relation of the circumferential positions, and the pressing is to place the cylindrical-wound electrode body in a posture to dispose the circumferential position of the first separator end portion in a predetermined circumferential position and to perform pressing.

In a wound electrode body, generally, a negative electrode plate is made longer than a positive electrode plate so that the entire positive electrode plate opposes the negative electrode plate via a separator. Further, in order to surely insulate the positive electrode plate and the negative electrode plate, a pair of separators are made to be further longer than the negative electrode plate. Accordingly, in the cylindrical-wound electrode body, the positive electrode end portion of the positive electrode plate is hidden inside the cylindrical-wound electrode body, and thus the positive electrode end portion fails to be visibly confirmed from a radially outside of the cylindrical-wound electrode body in most cases. Therefore, there are many cases in the pressing that the circumferential position of the positive electrode end portion is hard to be specified from an outer appearance of the cylindrical-wound electrode body.

To address the above problem, in the above-mentioned producing method, firstly in the winding, the cylindrical-wound electrode body is formed such that the circumferential position of the positive electrode end portion of the positive electrode plate and the circumferential position of the first separator end portion of the first separator which is finally finished with winding are in a predetermined circumferential positional relation. For example, a drift angle from the positive electrode end portion to the first separator end portion may be +180 degrees or within a range of +150 to +210 degrees.

Then in the pressing, the cylindrical-wound electrode body is placed in a posture such that the circumferential position of the first separator end portion is in the predetermined circumferential position and then the electrode body is pressed to place the positive electrode end potion in the flat portion of the flat-wound electrode body. The first separator end portion is positioned in an outermost circumference of the cylindrical-wound electrode body and thus can be easily seen from the radial outside. Accordingly, by setting the circumferential position of the first separator end portion as a reference, the positive electrode end portion can be easily and surely placed in the flat portion of the flat-wound electrode body.

Further, another aspect of the present disclosure is a producing method of a battery provided with a flat-wound electrode body in which a positive electrode plate of a strip shape and a negative electrode plate of a strip shape are wound into a flat shape via a pair of separators of a strip shape, wherein the method includes: electrode-body producing of producing the flat-wound electrode body by the above-mentioned producing method of the flat-wound electrode body; and battery assembling of assembling the battery by use of the flat-wound electrode body.

According to a result of study made by the present inventors, it has been confirmed that, in a battery in which a positive electrode end portion of a positive electrode plate is placed in an R part of a flat-wound electrode body, metal (for example, Li in a lithium-ion secondary battery), which has been reduced with metal ions that move between electrode plates for battery reaction, is easily precipitated in a vicinity of the positive electrode end portion of the negative electrode plate, more specifically, in the negative electrode plate, in a vicinity of an opposed part opposing a radial inside of the positive electrode end portion while the battery is being used.

The reason for this is explained as follows. When the positive electrode end portion is positioned in the R part of the flat-wound electrode body, the positive electrode end portion floats up to cause increase in a distance between the positive electrode end portion and the above-mentioned opposed part of the negative electrode plate. The resistance in this portion becomes locally high and a negative electrode potential sometimes becomes locally lower than a metal precipitation potential (for example, Li precipitation potential). Thereby, it is considered that metal precipitation such as Li precipitation occurs in the vicinity of the opposed part of the negative electrode plate.

To address this, in the above-mentioned producing method of the battery, a battery is assembled from the flat-wound electrode body produced by the above-mentioned producing method. Accordingly, in any one of the produced batteries, the positive electrode end portion is prevented from floating up, and thus the inter-electrode-plate distance between the positive electrode plate and the negative electrode plate can be restrained from becoming uneven in the vicinity of the positive electrode end portion. Therefore, in any one of the batteries, it is possible to restrain generation of metal precipitation such as Li precipitation in the vicinity of the opposed part of the negative electrode plate opposing the radial inside of the positive electrode end portion.

Herein, as a "battery", there are given a battery in which the above-mentioned flat-wound electrode body is housed in a metal-made battery case and a battery in which the flat-wound electrode body is housed in a battery case made of a laminate film. Further, in the battery, the flat portion of the flat-wound electrode body and the battery case may be contacted directly or interposed with an insulation film or the like, or alternatively, there may be a space between the flat-wound electrode body and the battery case.

Further, in the above-mentioned producing method of the battery, preferably, the battery comprises a flat battery case including a pair of primary-side surfaces opposing the flat portion of the flat-wound electrode body, the flat battery case being configured to store the flat-wound electrode body in a state in which the pair of primary-side surfaces hold and press the flat portion, and the battery assembling includes storing the flat-wound electrode body in the flat battery case.

In the battery produced by the above-mentioned producing method, the flat portion of the flat-wound electrode body is held and pressed by the pair of primary-side surfaces of the flat battery case. Accordingly, the positive electrode end portion of the positive electrode plate is pressed from an outside, thereby further effectively restraining floating up of the positive electrode end portion, so that the above-mentioned metal precipitation caused by floating up of the positive electrode end portion can be further assuredly prevented.

Another aspect of the present disclosure is a producing method of a battery module in which a plurality of batteries, each of which includes a flat-wound electrode body formed of a strip-shaped positive electrode plate and a strip-shaped negative electrode plate being wound into a flat shape interposed with a pair of strip-shaped separators, are stacked in a battery thickness direction and bound by a binding unit from outside of a stacking direction so that a flat portion of the flat-wound electrode body of the respective batteries is compressed in an electrode body thickness direction, wherein the method includes: battery producing of producing the battery by the above-mentioned producing method of the battery, and module assembling of assembling the battery module by stacking the plurality of batteries in the battery thickness direction, binding the batteries by the binding unit from outside of the stacking direction, and compressing the flat portion of the flat-wound electrode body of the respective batteries in the electrode body thickness direction.

In the above-mentioned producing method of the battery module, a battery module is produced by use of a battery produced by the above-mentioned producing method of the battery. Accordingly, among all the batteries included in this battery module, metal precipitation caused by floating of the positive electrode end portion of the positive electrode plate can be restrained. Furthermore, in this battery module, each of the batteries is bound and the flat portion of the respective flat-wound electrode bodies is compressed in the electrode body thickness direction. Accordingly, the positive electrode end portion is pressed from outside to further effectively restrain floating of the positive electrode end portion, and thus the metal precipitation caused by floating of the positive electrode end portion can be further assuredly prevented.

Herein, as a "battery module", for example, there may be given a battery module in which a plurality of batteries are directly stacked and bound by the binding unit and a battery module in which a plurality of batteries are alternately stacked with spacers and bound by the binding unit.

### BRIEF DESCRIPTION OF THE DRAWINGS

FIG. 1 is a simplified sectional view of a flat-wound electrode body in an embodiment taken along a line orthogonal to an electrode body axial direction;
FIG. 2 is a perspective view of a battery in the embodiment;
FIG. 3 is a side view of a battery module in the embodiment;
FIG. 4 is a flowchart for producing the battery module including production of the flat-wound electrode body and production of the battery in the embodiment;
FIG. 5 is an explanatory view of a winding step in the embodiment; and
FIG. 6 is an explanatory view of a press step in the embodiment.

### DETAILED DESCRIPTION OF THE EXEMPLARY EMBODIMENTS

### (Embodiment)

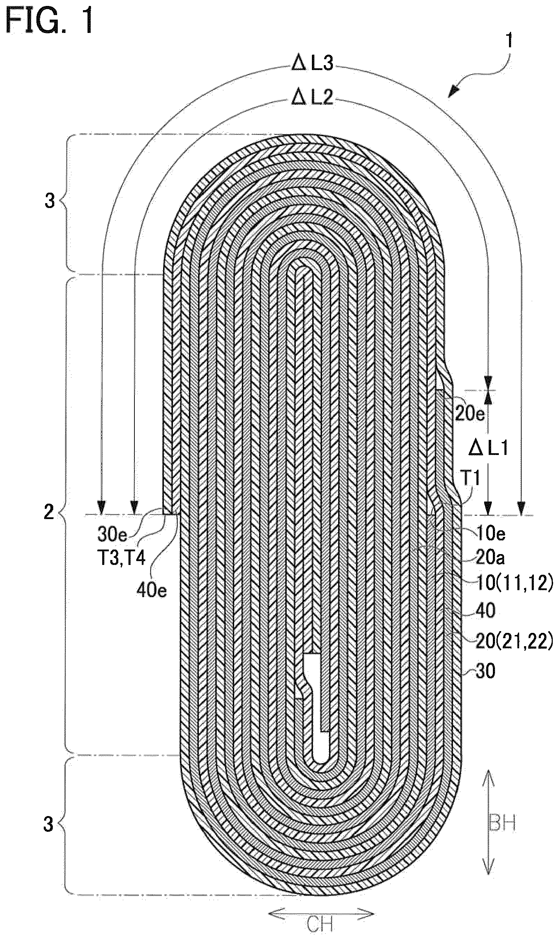

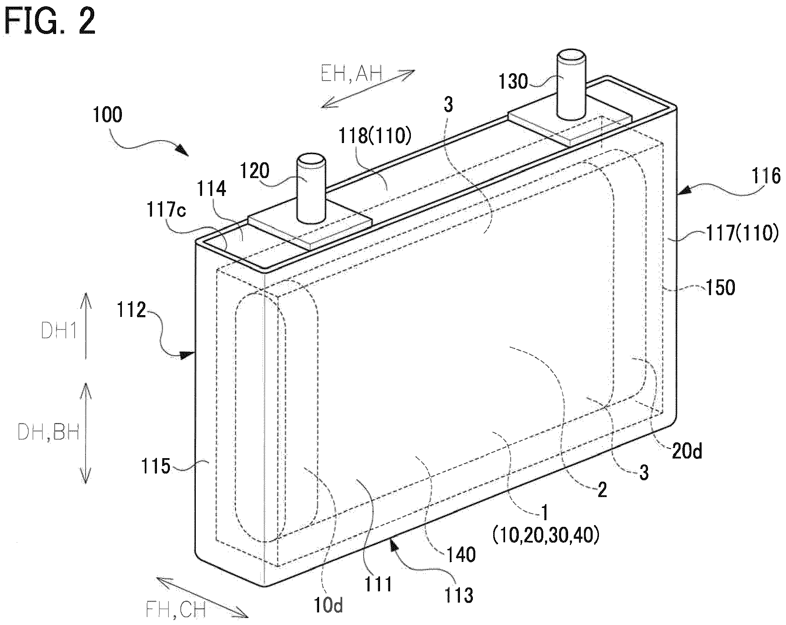

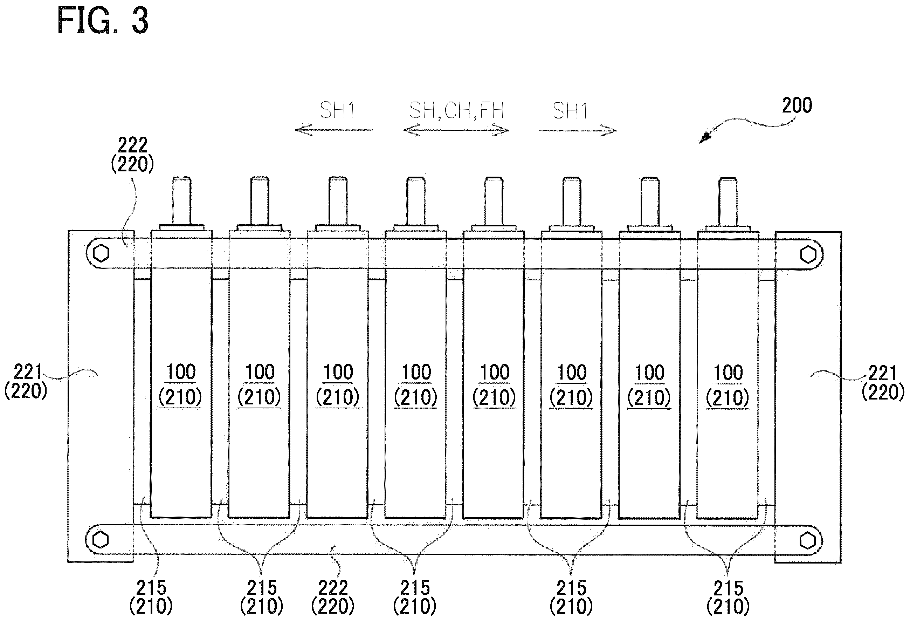

An embodiment of the present disclosure is explained in detail below with reference to the accompanying drawings. FIG. 1 is a sectional view of a flat-wound electrode body 1 according to the present embodiment, FIG. 2 is a perspective view of a battery 100 provided with the flat-wound electrode body 1, and FIG. 3 is a side view of a battery module 200 in which a plurality of the batteries 100 are stacked and bound. This battery module 200 is a battery module mounted on a vehicle or the like such as a hybrid vehicle, a plug-in hybrid vehicle, and an electric vehicle.

Firstly, the flat-wound electrode body 1 is explained (see FIG. 1 and FIG. 2). Herein, an electrode body axial direction AH, an electrode body width direction BH, and an electrode body thickness direction CH of the flat-wound electrode body 1 are defined as directions indicated in FIG. 1 and FIG. 2 for explanation. This flat-wound electrode body 1 is of an almost-parallelepiped flat rectangular shape and an electrode body formed by winding a strip-shaped positive electrode plate 10 and a strip-shaped negative electrode plate 20 into a flat shape interposed with a pair of separators (a first separator 30 and a second separator 40). The flat-wound electrode body 1 includes a flat portion 2 in which the first separator 30, the negative electrode plate 20, the second separator 40, and the positive electrode plate 10 are laminated in the electrode body thickness direction CH in a flat-plate like shape and a pair of R parts 3 which are positioned on both sides in the electrode body width direction BH of this flat portion 2 and formed of the first separator 30, the negative electrode plate 20, the second separator 40, and the positive electrode plate 10 being bent in a semicylindrical shape and laminated.

The positive electrode plate 10 includes a positive current collecting foil 11 formed of a strip-shaped aluminum foil. On both primary surfaces of this positive current collecting foil 11, a positive active material layer 12 including positive active material particles which can occlude and release lithium ions is formed in a strip-like shape, respectively. One end portion in a width direction of the positive electrode plate 10 has no positive active material layer 12 existed in the thickness direction and is a positive electrode exposed portion 10d (see FIG. 2) where the positive current collecting foil 11 is exposed in the thickness direction. This positive electrode exposed portion 10d is electrically connected to a positive terminal 120 in the battery 100.

In the flat-wound electrode body 1, a positive electrode end portion 10e at an end of winding of the positive electrode plate 10 is positioned in an almost center of the flat portion 2 of the flat-wound electrode body 1 in the electrode body width direction BH. In the flat-wound electrode body 1 in which the positive electrode end portion 10e is placed in the flat portion 2 in this manner, the positive electrode end portion 10e is restrained from floating, and thus it is possible to restrain unevenness in an inter-electrode-plate distance between the positive electrode plate 10 and the negative electrode plate 20 in a vicinity of the positive electrode end portion 10e. Accordingly, in the battery 100 explained later, it is possible to restrain occurrence of Li precipitation in a vicinity of an opposed part 20a of the negative electrode plate 20 opposing a radial inside of the positive electrode end portion 10e.

The negative electrode plate 20 includes a negative current collecting foil 21 formed of a stirp-shape copper foil. On both primary surfaces of this negative current collecting foil 21, a negative active material layer 22 including negative active material particles that can occlude and release lithium ions is formed in a strip-like shape, respectively. In the negative electrode plate 20, one end portion in the width direction has no negative active material layer 22 in the thickness direction and is a negative electrode exposed portion 20d (see FIG. 2) where the negative current collecting foil 21 is exposed in the thickness direction. This negative electrode exposed portion 20d is electrically connected to a negative terminal 130 in the battery 100. In the flat-wound electrode body 1, a winding end of the negative electrode plate 20 is made longer than a winding end of the positive electrode plate 10 by a predetermined length ΔL1, and thus a negative electrode end portion 20e of the negative electrode plate 20 is finished with its winding subsequent to the positive electrode end portion 10e of the positive electrode plate 10.

The first separator 30 and the second separator 40 are each in a strip shape and made of resin-made porous film. An outermost circumference of the flat-wound electrode body 1 is constituted of the first separator 30, and a first separator end portion 30e at the winding end of the first separator 30 is fixed to the first separator 30 by a not-shown adhesive tape.

In the flat-wound electrode body 1, the winding end of the first separator 30 and the winding end of the second separator 40 are each made longer than the winding end of the negative electrode plate 20 by a predetermined length ΔL2 (longer than the positive electrode plate 10 by a predetermined length ΔL3 = ΔL1 + ΔL2). A first separator end portion 30e of the first separator 30 and a second separator end portion 40e of the second separator 40 are finished with their winding subsequent to winding of a negative electrode end portion 20e of the negative electrode plate 20. Herein, in the present embodiment, a circumferential position T3 of the first separator end portion 30e and a circumferential position T4 of the second separator end portion 40e are located at the same position, but alternatively, the first separator 30 may be wound longer than the second separator 40.

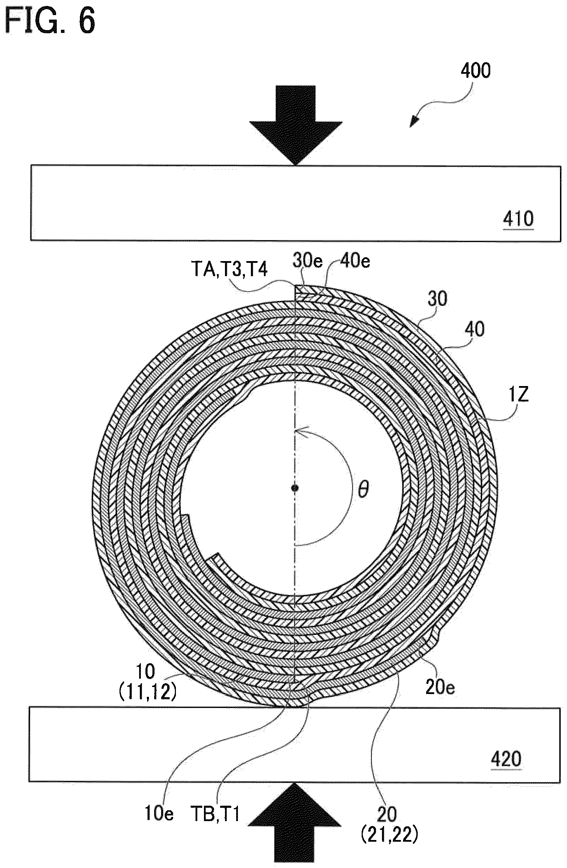

Thus, the circumferential position T1 of the positive electrode end portion 10e and the circumferential position T3 of the first separator end portion 30e which is positioned on an outermost circumference of the flat-wound electrode body 1 are in a predetermined circumferential positional relation. Specifically, in the present embodiment, in a cylindrical-wound electrode body 1Z before pressing, which will be explained later, a drift angle *θ* from the circumferential position T1 of the positive electrode end portion 10e to the circumferential position T3 of the first separator end portion 30e is arranged to be about *θ* = +180 degrees (see FIG. 6).

Next, the battery 100 provided with the above-mentioned flat-wound electrode body 1 is explained (see FIG. 2). Herein, the following explanation is made with defining a battery vertical direction DH, a battery lateral direction EH, and a battery thickness direction FH of the battery 100 as directions indicated in FIG. 2. This battery 100 is configured with the flat-wound electrode body 1, a flat battery case (hereinafter, simply referred as a "case") 110 housing the electrode body 1 therein, a positive terminal 120 and a negative terminal 130 which are supported in this case 110, and others. Further in the case 110, an electrolytic solution 140 is housed in a manner that a part of the electrolytic solution 140 is impregnated in the flat-wound electrode body 1 and another part remains on a bottom surface 113 of the case 110. Further, the flat-wound electrode body 1 is covered with an insulation film 150 of a bag-like shape opening on one side DH1 in the battery vertical direction DH.

The case 110 is of a flat rectangular parallelepiped box-like shape made of aluminum. Specifically, the case 110 includes a pair of primary-side surfaces (a first primary side surface 111 and a second primary side surface 112) placed in parallel and the bottom surface 113, a top surface 114, and a pair of narrow side surfaces (a first narrow side surface 115 and a second narrow side surface 116) which join those primary-side surfaces. The first primary side surface 111 and the second primary side surface 112 oppose the flat portion 2 of the flat-wound electrode body 1 housed in the case 110 respectively to hold and press the flat portion 2 in the electrode body thickness direction CH. The positive electrode end portion 10e of the positive electrode plate 10 is thus pressed from outside, so that the positive electrode end portion 10e is effectively restrained from floating.

The case 110 is configured with a case body member 117 of a bottomed rectangular cylindrical shape having an opening 117c on the one side DH1 in the battery vertical direction DH and a case lid member 118 of a rectangular plate-like shape welded to the case body member 117 to close the opening 117c. The case body member 117 accommodates the flat-wound electrode body 1 covered with the insulation film 150.

On the other hand, the case lid member 118 is fixedly provided with the positive terminal 120 configured with a plurality of aluminum components in a state insulated from the case lid member 118. This positive terminal 120 is connected and conducted with a positive electrode exposed portion 10d of the positive electrode plate 10 of the flat-wound electrode body 1 inside the case 110, and the positive terminal 120 penetrates through the case lid member 118 to extend outside the battery. Further, the case lid member 118 is fixedly provided with a negative terminal 130 configured with a plurality of copper components in a state insulated from the case lid member 118. This negative terminal 130 is connected and conducted with a negative electrode exposed portion 20d of the negative electrode plate 20 of the flat-wound electrode body 1 inside the case 110, and the negative terminal 130 penetrates through the case lid member 118 to extend outside the battery.

Next, a battery module 200 provided with the above-mentioned plurality of batteries 100 is explained (see FIG. 3). This battery module 200 is provided with a battery assembly 210 in which the plurality of batteries 100 are stacked in the battery thickness direction FH and a binding unit 220 to bind this battery assembly 210 from an outer side SH1 of a stacking direction SH. In the battery assembly 210, the plurality of batteries 100 and a plurality of spacers 215 made of insulating resin are alternately arranged in the stacking direction SH. Further, the respective batteries 100 configuring the battery assembly 210 are electrically connected via not-shown bus bars.

The binding unit 220 includes a pair of metal-made end plates 221 and four binding bands 222 which are bridged over the end plates 221 to couple a space between the end plates 221. The end plates 221 are each placed on the outer side SH1 in the stacking direction SH of the battery assembly 210 to hold and press the battery assembly 210 in the stacking direction SH. The binding bands 222 are made of strip-shaped metal plates and extended in the longitudinal direction so that both end portions thereof are each fixed to the end plates 221. Accordingly, the respective batteries 100 configuring the battery assembly 210 are compressed in the stacking direction SH (the battery thickness direction FH), and the flat portion 2 of the flat-wound electrode body 1 of the respective batteries 100 are compressed in the electrode body thickness direction CH.

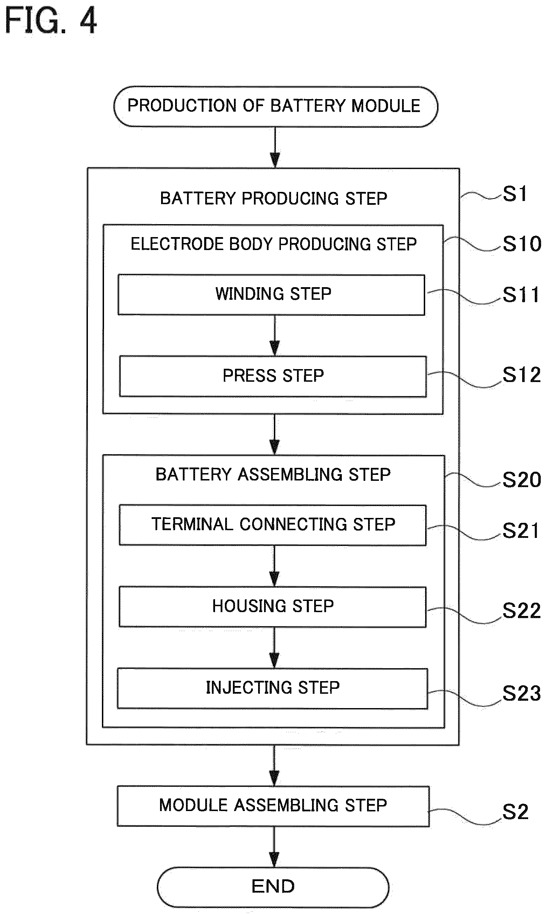

Next, a producing method of the flat-wound electrode body 1, a producing method of the battery 100 utilizing this flat-wound electrode body 1, and a producing method of the battery module 200 utilizing the battery 100 are explained (see FIG. 4 to FIG. 6).

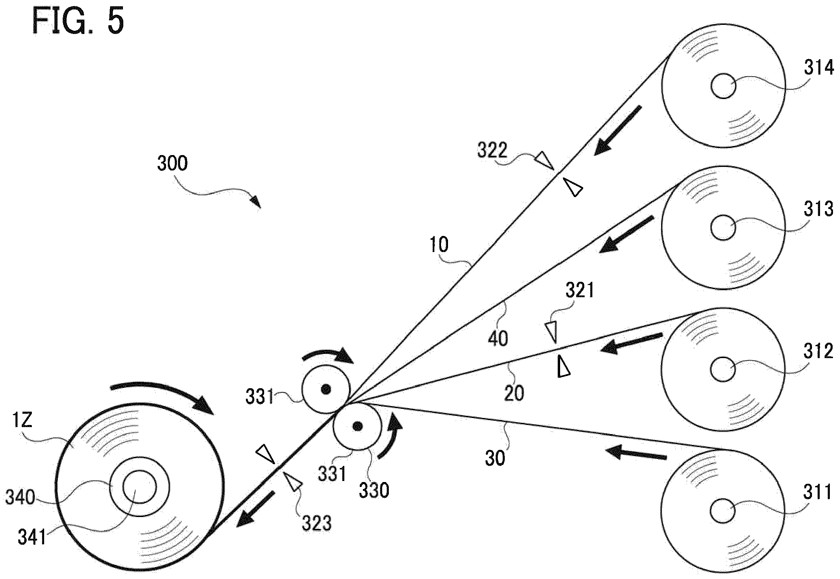

Firstly, in an "electrode body producing step" S10 in a "battery producing step" S1, the flat-wound electrode body 1 is produced. Namely, the positive electrode plate 10, the negative electrode plate 20, the first separator 30, and the second separator 40, each of which has been wound into a roll-like shape, are prepared. In a "winding step" S11 of the electrode body producing step S10, the first separator 30, the negative electrode plate 20, the second separator 40, and the positive electrode plate 10 are laminated in this order and then wound into a cylindrical shape to form the cylindrical-wound electrode body 1Z (see FIG. 5).

A winding device 300 used in this winding step S11 is provided with a first separator supply section 311, a negative electrode plate supply section 312, a second separator supply section 313, a positive electrode plate supply section 314, a negative electrode plate cutting section 321, a positive electrode plate cutting section 322, a separator cutting section 323, a roller unit 330, and a winding unit 340.

The respective supply sections (the first separator supply section 311, the negative electrode supply section 312, the second separator supply section 313, and the positive electrode supply section 314) are configured to feed the respective roll-shaped components (the first separator 30, the negative electrode plate 20, the second separator 40, and the positive electrode plate 10) toward the roller unit 330.

The negative electrode cutting section 321 is provided between the negative electrode plate supply section 312 and the roller unit 330 and configured to cut the negative electrode plate 20. Further, the positive electrode plate cutting section 322 is provided between the positive electrode plate supply section 314 and the roller unit 330 and configured to cut the positive electrode plate 10. Further, the separator cutting section 323 is provided between the roller unit 330 and the winding unit 340 and configured to cut the first separator 30 and the second separator 40 which have been laminated by the roller unit 330 in one action.

The roller unit 330 includes a pair of pressure rolls 331, and in a roll gap of these rolls, the first separator 30, the negative electrode plate 20, the second separator 40, and the positive electrode plate 10 are serially laminated in this order.

The winding unit 340 includes a winding roll 341 configured to wind the first separator 30, the negative electrode plate 20, the second separator 40, and the positive electrode plate 10 which have been laminated by the roller unit 330 in a cylindrical shape.

In the winding step S11 utilizing this winding device 300, the first separator 30 fed out of the first separator supply section 311, the negative electrode plate 20 fed out from the negative electrode plate supply section 312, the second separator 40 fed out from the second separator supply section 313, and the positive electrode plate 10 fed out from the positive electrode plate supply section 314 proceed to the roller unit 330. Then, in the roll gap of the pair of pressure rolls 331 of the roller unit 330, the first separator 30, the negative electrode plate 20, the second separator 40, and the positive electrode plate 10 are laminated in this order. Thereafter, the thus laminated components are wound up into a cylindrical shape by the winding roll 341 of the winding unit 340 to form the cylindrical-wound electrode body 1Z. After that, the first separator end portion 30e is fixed to the cylindrical-wound electrode body 1Z by a not-shown adhesive tape.

As for a winding end of the cylindrical-wound electrode body 1Z, the positive electrode plate 10 is firstly cut by the positive electrode cutting section 322. Subsequently, the negative electrode plate 20 is cut by the negative electrode plate cutting section 321 at a position where the negative electrode plate 20 is longer by the length ΔL1 than the positive electrode end portion 10e of the positive electrode plate 10 (see FIG. 1). Subsequently, the first separator 30 and the second separator 40 are concurrently cut by the separator cutting section 323 at a position where the first separator 30 and the second separator 40 are each made longer than the negative electrode end portion 20e of the negative electrode plate 20 by the length ΔL2 (the position where the first separator 30 and the second separator 40 are each made longer than the positive electrode end portion 10e of the positive electrode plate 10 by the length ΔL3 = ΔL1 + ΔL2, see FIG. 1).

By this cutting operation, the circumferential position T1 of the positive electrode end portion 10e and the circumferential position T3 of the first separator end portion 30e can be in the predetermined circumferential positional relation in the cylindrical-wound electrode body 1Z. In the present embodiment, as shown in FIG. 6, the drift angle *θ* from the circumferential position T1 of the positive electrode end portion 10e to the circumferential position T3 of the first separator end portion 30e is set as *θ* = +180 degrees. Herein, the first separator 30 and the second separator 40 are cut at the same time by the separator cutting section 323, and thus the circumferential position T3 of the first separator end portion 30e and a circumferential position T4 of the second separator end portion 40e are positioned at the same position.

Next, in the "press step" S12 in the electrode body producing step S10, the above-mentioned cylindrical-wound electrode body 1Z is pressed and flattened by use of the press device 400 to form the flat-wound electrode body 1 (see FIG. 6). This press step S12 is performed such that the positive electrode end portion 10e of the positive electrode plate 10 is positioned in the flat portion 2 of the flat-wound electrode body 1.

Firstly, the cylindrical-wound electrode body 1Z is placed on a lower die 420. At this time, the cylindrical-wound electrode body 1Z is placed on the lower die 420 in a posture that the circumferential position T3 of the first separator end portion 30e of the first separator 30 is located on the predetermined circumferential position TA (a topmost position in the present embodiment).

Herein, in the cylindrical-wound electrode body 1Z, the positive electrode end portion 10e of the positive electrode plate 10 is hidden inside the cylindrical-wound electrode body 1Z, and thus the positive electrode end portion 10e cannot be seen from a radial outer side of the cylindrical-wound electrode body 1Z. Therefore, it is difficult to specify the circumferential position T1 of the positive electrode end portion 10e from an outer appearance of the cylindrical-wound electrode body 1Z.

To address this, in the above-mentioned winding step S11, the circumferential position T1 of the positive electrode end portion 10e and the circumferential position T3 of the first separator end portion 30e are in the predetermined circumferential positional relation. The first separator end portion 30e is on the outermost circumference of the cylindrical-wound electrode body 1Z, and thus the first separator end portion 30e is easily visibly confirmed from the radially outside. Accordingly, in the press step S12, the cylindrical-wound electrode body 1Z can be placed in the press device 400 such that the circumferential position T1 of the positive electrode end portion 10e is positioned at a predetermined circumferential position TB by arranging the circumferential position T3 of the first separator end portion 30e at the predetermined circumferential position TA.

In the present embodiment, in the winding step S11, the drift angle θ from the circumferential position T1 of the positive electrode end portion 10e to the circumferential position T3 of the first separator end portion 30e is set as +180 degrees. Accordingly, the cylindrical-wound electrode body 1Z is disposed on the lower die 420 in a manner that the circumferential position T3 of the first separator end portion 30e is at the circumferential position TA (a right overhead position), and thereby the circumferential position T1 of the positive electrode end portion 10e can be disposed at the circumferential position TB (a just underneath position in the present embodiment).

After that, the cylindrical-wound electrode body 1Z is pressed to be flattened between an upper die 410 and the lower die 420 of the press device 400 to form the flat-wound electrode body 1. Thus, the positive electrode end portion 10e is positioned at an almost center in the electrode body width direction BH of the flat portion 2 of the flat-wound electrode body 1. As a result of this, the positive electrode end portion 10e is placed in the flat portion 2 and the flat-wound electrode body 1 restrained from floating of the positive electrode end portion 10e can be produced.

Subsequently in a "battery assembling step" S20 of the battery producing step S1, the battery 100 is assembled by use of the above-mentioned flat-wound electrode body 1.

Firstly, in a "terminal connecting step" S21 of the battery assembly step S20, the positive electrode terminal 120 and the negative electrode terminal 130 are fixedly attached to the case lid member 118 (see FIG. 1). Further, the positive electrode terminal 120 and the negative electrode terminal 130 are each welded to the positive electrode exposed portion 10d of the positive electrode plate 10 and the negative electrode exposed portion 20d of the negative electrode plate 20 of the flat-wound electrode body 1 so that the positive electrode terminal 120 and the negative electrode terminal 130 are electrically connected to the flat-wound electrode body 1.

Next, in the "housing step" S22, the above-mentioned flat-wound electrode body 1 is wrapped with a bag-like insulation film 150 and inserted in the case body member 117, and then the opening 117c of the case body member 117 is closed by the case lid member 118. Thereafter, the case body member 117 and the case lid member 118 are welded over an entire circumference of the case lid member 118 to form the case 110. The flat portion 2 of the flat-wound electrode body 1 housed in the case 110 is held and pressed in the electrode body thickness direction BH by the first primary side surface 111 and the second primary side surface 112 of the case 110. Accordingly, the positive electrode end portion 10e of the positive electrode plate 10 can be further effectively restrained from floating.

Subsequently, in an "injecting step" S23, the electrolytic solution 140 is injected in the case 110 through an injection hole (not-shown) of the case lid member 118, and then the injection hole is closed by a closing member (not-shown). After that, this battery 100 is performed with operations such as initial charging, aging, and various tests. In this manner, the battery 100 is produced.

Next, in a "module assembling step" S2, the plurality of batteries 100 are stacked in the battery thickness direction FH and bound from the outside SH1 of the stacking direction SH by the binding unit 220 to assemble the battery module 200 in which the flat portion 2 of the flat-wound electrode body 1 of the respective batteries 100 is compressed in the electrode body thickness direction FH. Specifically, the batteries 100 and spacers 215 are alternately stacked in the battery thickness direction FH to form the battery assembly body 210, and further, end plates 221 of the binding unit 220 are overlapped on the outside SH in the stacking direction SH of the battery assembly body 210. After that, the battery assembly body 210 and the end plates 221 are pressed from the outside SH1 of the stacking direction SH by use of a not-shown pressure jig and the binding bands 222 of the binding unit 220 bridging over the end plates 221 for fixing, respectively, so that the battery assembly body 210 is bound. Then, the batteries 100 are electrically connected one another by use of not-shown bus bars. In this manner, the battery module 200 is completed.

As explained above, in the producing method of the flat-wound electrode body 1, the cylindrical-wound electrode body 1Z is pressed to form the flat-wound electrode body 1 such that the positive electrode end portion 10e of the positive electrode plate 10 is positioned in the flat portion 2 of the flat-wound electrode body 1 after pressing. Thus, in any one of the produced flat-wound electrode bodies 1, the positive electrode end portion 10e of the positive electrode plate 10 can be placed inside the flat portion 2 of the flat-wound electrode body 1, thereby restraining floating up of the positive electrode end portion 10e and restraining unevenness in the inter-electrode-plate distance between the positive electrode plate 10 and the negative electrode plate 20 in the vicinity of the positive electrode end portion 10e in any one of the flat-wound electrode bodies 1.

Further in the present embodiment, firstly in the winding step S11, the cylindrical-wound electrode body 1Z is formed such that the circumferential position T1 of the positive electrode end portion 10e of the positive electrode plate 10 and the circumferential position T3 of the first separator end portion 30e of the first separator 30 are in the predetermined circumferential positional relation. Then, in the press step S12, the cylindrical-wound electrode body 1Z is placed in a posture that the circumferential position T3 of the first separator end portion 30e is positioned at the predetermined circumferential position TA, and the cylindrical-wound electrode body 1Z is then pressed. The positive electrode end portion 10e is thereby placed in the flat portion 2 of the flat-wound electrode body 1. The first separator end portion 30e resides at the outermost circumference in the cylindrical-wound electrode body 1Z, and accordingly, the first separator end portion 30e can be easily visibly confirmed from the radial outside. Therefore, by setting the circumferential position T3 of the first separator end portion 30e as a reference, the positive electrode end portion 10e can be easily and assuredly placed in the flat portion 2 of the flat-wound electrode body 1.

Further, in the producing method of the battery 100, the battery 100 is assembled by use of the flat-wound electrode body 1 that has been produced in the electrode body producing step S10. Accordingly, in any one of the produced batteries 100, the positive electrode end portion 10e can be restrained from floating and unevenness in the inter-electrode-plate distance between the positive electrode plate 10 and the negative electrode plate 20 in the vicinity of the positive electrode end portion 10e can be restrained. Therefore, in any one of the batteries 100, it is possible to restrain generation of Li precipitation in a vicinity of a portion of the negative electrode plate 20 opposing the radial inside of the positive electrode end portion 10e.

Further, in the battery 100 produced in the battery producing step S1, the flat portion 2 of the flat-wound electrode body 1 is held and pressed by the pair of primary-side surfaces 111 and 112 of the case 110. Accordingly, the positive electrode end portion 10e of the positive electrode plate 10 is pushed from outside to further effectively restrain floating of the positive electrode end portion 10e, so that Li precipitation caused by floating of the positive electrode end portion 10e can be further effectively restrained.

Further, in the producing method of the battery module 200, the battery module 200 is produced by use of the battery 100 produced in the battery producing step S1. Therefore, in this battery module 200, all the batteries 100 included in this module can be restrained with Li precipitation caused by floating of the positive electrode end portion 10e. Furthermore, in this battery module 200, the respective batteries 100 are bound and each of the flat portions 2 of the flat-wound electrode bodies 1 is compressed in the electrode body thickness direction CH. Accordingly, the positive electrode end portion 10e is pressed from outside to further effectively restrain floating of the positive electrode end portion 10e, so that the Li precipitation caused by floating of the positive electrode end portion 10e can further be restrained.

The present disclosure has been explained with the embodiment as above, but the present disclosure is not limited to the embodiment and may be adapted with any appropriate modifications without departing from the scope of the disclosure.

### Reference Signs List

- 1: Flat-wound electrode body
- 1Z: Cylindrical-wound electrode body
- 2: Flat portion
- 3: R part
- 10: Positive electrode plate
- 10e: Positive electrode end portion
- 20: Negative electrode plate
- 20e: Negative electrode end portion
- 30: First separator
- 30e: First separator end portion
- 40: Second separator
- 40e: Second separator end portion
- 100: Battery
- 110: Flat battery case (case)
- 111: First primary-side surface
- 112: Second primary-side surface
- 200: Battery module
- 210: Battery assembly body
- 220: Binding unit
- 300: Winding device
- 400: Press device
- CH: Electrode body thickness direction
- FH: Battery thickness direction
- SH: Stacking direction
- SH1: Outside (in a stacking direction)
- T1: Circumferential position (of the positive electrode end portion)
- T3: Circumferential position (of the first separator end portion)
- TA, TB: Circumferential position (predetermined)
- *Θ*: Drift angle
- S1: Battery producing step
- S10: Electrode body producing step
- S11: Winding step
- S12: Press step
- S20: Battery assembling step
- S21: Terminal connecting step
- S22: Housing step
- S23: Injecting step
- S2: Module assembling step

## Claims

1. A producing method of a flat-wound electrode body (1) in which a positive electrode plate (10) of a strip shape and a negative electrode plate (20) of a strip shape are wound into a flat shape interposed with a pair of separators (30,40) of a strip shape, wherein
the method includes:
winding (S11) the positive electrode plate (10) and the negative electrode plate (20) into a flat shape interposed with the pair of separators (30,40) to form a cylindrical-wound electrode body (1Z); and
pressing (S12) the cylindrical-wound electrode body (1Z) to be flattened to form the flat-wound electrode body (1), and
the pressing (S12) is performed to position a positive electrode end portion (10e) at a winding end of the positive electrode plate (10) in a flat portion (2) of the flat-wound electrode body (1).

2. The producing method of the flat-wound electrode body (1) according to claim 1, wherein
the winding (S11) is to form the cylindrical-wound electrode body (1Z) to be disposed with a circumferential position (T1) of the positive electrode end portion (10e) and a circumferential position (T3) of a first separator end portion (30e) of a first separator (30) of the pair of the separators (30, 40), which is finally finished with winding, being in a predetermined relation of the circumferential positions, and
the pressing (S12) is to place the cylindrical-wound electrode body (1Z) in a posture to dispose the circumferential position (T3) of the first separator end portion (30e) in a predetermined circumferential position (TA) and to perform pressing.

3. A producing method of a battery (100) provided with a flat-wound electrode body (1) in which a positive electrode plate (10) of a strip shape and a negative electrode plate (20) of a strip shape are wound into a flat shape via a pair of separators (30,40) of a strip shape, wherein
the method includes:
electrode-body producing (S10) of producing the flat-wound electrode body (1) by the producing method of the flat-wound electrode body (1) according to claim 1 or 2; and
battery assembling (S20) of assembling the battery (100) by use of the flat-wound electrode body (1).

4. The producing method of the battery (100) according to claim 3, wherein
the battery (100) comprises a flat battery case (110) including a pair of primary-side surfaces (111, 112) opposing the flat portion (2) of the flat-wound electrode body (1), the flat battery case (110) being configured to store the flat-wound electrode body (1) in a state in which the pair of primary-side surfaces (111, 112) hold and press the flat portion (2), and
the battery assembling (S20) includes storing (S22) the flat-wound electrode body (1) in the flat battery case (110).

5. A producing method of a battery module (200) in which a plurality of batteries (100), each of which includes a flat-wound electrode body (1) formed of a strip-shaped positive electrode plate (10) and a strip-shaped negative electrode plate (20) being wound into a flat shape interposed with a pair of strip-shaped separators (30,40), are stacked in a battery thickness direction (FH) and bound by a binding unit (220) from outside (SH1) of a stacking direction (SH) so that a flat portion (2) of the flat-wound electrode body (1) of the respective batteries (100) is compressed in an electrode body thickness direction (CH), wherein
the method includes:
battery producing (S1) of producing the battery (100) by the producing method of the battery (100) according to claim 3 or claim 4, and
module assembling (S2) of assembling the battery module (200) by stacking the plurality of batteries (100) in the battery thickness direction (FH), binding the batteries (100) by the binding unit (220) from outside (SH1) of the stacking direction (SH), and compressing the flat portion (2) of the flat-wound electrode body (1) of the respective batteries (100) in the electrode body thickness direction (FH).
